(19) Europäisches Patentamt
European Patent Office
Office européen des brevets

(11) EP 1 732 386 B1

(12) **EUROPEAN PATENT SPECIFICATION**

(45) Date of publication and mention of the grant of the patent:
**06.03.2013 Bulletin 2013/10**

(21) Application number: **05746280.6**

(22) Date of filing: **05.04.2005**

(51) Int Cl.:
***A01N 43/40*** ***(2006.01)*** ***A01N 43/32*** ***(2006.01)***
*A01N 43/40 (2006.01)* *A01N 43/32 (2006.01)*
*A01N 59/26 (2006.01)* *A01N 57/12 (2006.01)*
*A01N 43/32 (2006.01)* *A01N 59/26 (2006.01)*
*A01N 57/12 (2006.01)*

(86) International application number:
**PCT/EP2005/005202**

(87) International publication number:
**WO 2005/096817 (20.10.2005 Gazette 2005/42)**

(54) **FUNGICIDAL COMPOSITION COMPRISING A PYRIDYLMETHYLBENZAMIDE DERIVATIVE AND A QUINONE DERIVATIVE**

FUNGIZIDE ZUSAMMENSETZUNG, DIE EIN PYRIDYLMETHYLBENZAMIDDERIVAT UND EIN CHINONDERIVAT ENTHÄLT

COMPOSITION FONGICIDE CONTENANT UN DERIVE DE PYRIDYLMETHYLBENZAMIDE ET UN DERIVE DE QUINONE

(84) Designated Contracting States:
**AT BE BG CH CY CZ DE DK EE ES FI FR GB GR HU IE IS IT LI LT LU MC NL PL PT RO SE SI SK TR**

(30) Priority: **06.04.2004 EP 04356046**

(43) Date of publication of application:
**20.12.2006 Bulletin 2006/51**

(73) Proprietor: **BAYER CROPSCIENCE SA**
**69009 Lyon Cédex 09 (FR)**

(72) Inventors:
- **LATORSE, Marie-Pascale**
**F-69490 Saint Romain de Popey (FR)**
- **WEGMANN, Thomas**
**40764 Langenfeld (DE)**
- **GOUOT, Jean-Marie**
**F-69450 ST Cyr Au Mont D'Or (FR)**

(74) Representative: **Nowak, Alexander et al**
**Bayer CropScience AG**
**Business Planning and Administration**
**Law and Patents**
**Patents and Licensing**
**Alfred-Nobel-Strasse 50**
**40789 Monheim (DE)**

(56) References cited:
**WO-A-99/42447** **WO-A-02/069713**
**WO-A-03/079788** **WO-A-2004/008857**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 732 386 B1

## Description

The present invention relates to novel fungicidal compositions comprising a pyridylmethylbenzamide derivative and a quinone derivative. The present invention also relates to a method of combating phytopathogenic fungi by applying at a locus infested or liable to be infested such a composition.
European patent application EP-A-1056723 generically discloses the possibility of combining pyridylmethybenzamide derivatives with known fungicidal products to develop a fungicidal activity.
International patent application WO 02/069713 discloses fungicidal mixtures comprising a pyridylmethylbenzamide derivative and phosphorous acid or one of its derivatives.
International patent application WO 2004/008857 discloses fungicidal mixtures comprising a quinone derivative and phosphorous acid or one of its derivatives.
Some of the above mentioned mixtures have shown a synergistic effect. Nevertheless, it is always of high-interest in agriculture to use novel pesticidal mixtures showing a synergistic effect in order to avoid or to control the development of resistant strains to the active ingredients or to the mixtures of known active ingredients used by the farmer while minimising the doses of chemical products spread in the environment and reducing the cost of the treatment.
We have now found some novel fungicidal compositions which possess the above mentioned characteristics.
Accordingly, the present invention relates to a composition comprising:

a) a pyridylmethylbenzamide derivative of general formula (I)

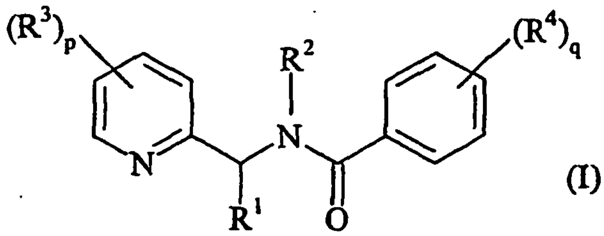

(I)

in which :

- $R^1$ may be a hydrogen atom, an optionally substituted alkyl group or an optionally substituted acyl group;
- $R^2$ may be a hydrogen atom or an optionally substituted alkyl group;
- $R^3$ and $R^4$ may be chosen independently from each other as being a halogen atom, a hydroxyl group, a cyano group, a nitro group, $-SF_5$, a trialkylsilyl group, an optionally substituted amino group, an acyl group, or a group E, OE or SE, in which E may be an alkyl, alkenyl, alkynyl, cycloalkyl, cycloalkenyl, aryl or a heterocyclyl group each of which may optionally be substituted;
- p represents 0, 1, 2, 3 or 4;
- q represents 0, 1, 2, 3 or 4;

and its agriculturally acceptable optical and/or geometric isomers, tautomers and addition salts with an acid or a base; and
b) 5,10-dihydro-5,10-dioxonaphtho[2,3-b]-1,4-dithiine-2,3-dicarbonitrile;

in a (a) / (b) weight ratio of from 0.01 to 10.
5,10-dihydro-5,10-dioxonaphtho[2,3-b]-1,4-dithiine-2,3-dicarbonitrile is a quinone derivative fungicide also known as dithianon.
In the context of the present invention :

- the term halogen means bromine, chlorine, iodine or fluorine;
- the term alkyl means a linear or branched saturated hydrocarbon group containing from 1 to 6 carbon atoms;
- the term alkenyl means a linear or branched hydrocarbon group containing from 2 to 6 carbon atoms and an unsaturation in the form of double bond;
- the term alkynyl means a linear or branched hydrocarbon group containing from 2 to 6 carbon atoms and an unsaturation in the form of a triple bond;
- the term alkoxy means a linear or branched alkyloxy group containing from to 1 to 6 carbon atoms;
- the term acyl means a formyl group or linear or branched alkoxycarbonyl group containing from 2 to 6 carbon atoms;
- the term cycloalkyl means a saturated cyclic hydrocarbon group containing from 3 to 8 carbon atoms;

- the term aryl means a phenyl or naphthyl group;
- the term heterocyclyl means saturated, partially saturated, unsaturated or aromatic cyclic group containing from 3 to 8 atoms, which may be a carbon atom, a nitrogen atom, a sulphur atom or an oxygen atom. Examples of such hetercoyclyl may be pyridyl, pyridinyl, quinolyl, furyl, thienyl, pyrrolyl, oxazolinyl;
- the term "optionally substituted " means that the group thus termed may be substituted with one or more groups which may be halogen, alkyl, alkoxy, hydroxyl, nitro, amin, cyano or acyl.

The composition according to the present invention provides a synergistic effect. This synergistic effect allows a reduction of the chemical substances spread into the environment and a reduction of the cost of the fungal treatment.
In the context of the present invention, the term "synergistic effect" is defined by Colby according to the article entitled "Calculation of the synergistic and antagonistic responses of herbicide combinations" Weeds, (1967), 15, pages 20-22.
The latter article mentions the formula:

$$E = x + y - \frac{x * y}{100}$$

in which E represents the expected percentage of inhibition of the disease for the combination of the two fungicides at defined doses (for example equal to x and y respectively), x is the percentage of inhibition observed for the disease by the compound (I) at a defined dose (equal to x), y is the percentage of inhibition observed for the disease by the compound (II) at a defined dose (equal to y). When the percentage of inhibition observed for the combination is greater than E, there is a synergistic effect.
In the context of the present invention, the term "synergistic effect" also means the effect defined by application of the Tammes method, "Isoboles, a graphic representation of synergism in pesticides", Netherlands Journal of Plant Pathology, 70(1964), pages 73-80.
The composition according to the present invention comprises a pyridylmethylbenzamide derivative of general formula (I).
Preferably, the present invention relates to a composition comprising a pyridylmethylbenzamide derivative of general formula (I) in which the different characteristics may be chosen alone or in combination as being:

- as regards $R^1$ and $R^2$, $R^1$ and $R^2$ may be chosen independently from each other as being a hydrogen atom or an optionally substituted alkyl group. More preferably, $R^1$ and $R^2$ may be chosen independently from each other as being a hydrogen atom, a methyl group or an ethyl group. Even more preferably, $R^1$ and $R^2$ may be both hydrogen atoms.
- as regards $R^3$ and $R^4$, $R^3$ and $R^4$ may be chosen independently from each other as being a halogen atom, a hydroxyl group, a nitro group, an optionally substituted amino group, an acyl group, or a group E, OE or SE, in which E may be a alkyl, a cycloalkyl, a phenyl or a heterocyclyl group, each of which may optionally be subtituted. More preferably, $R^3$ and $R^4$ may be chosen independently from each other as being a halogen atom, a nitro group or a halogenoalkyl group. Even more preferably $R^3$ and $R^4$ may be chosen independently from each other as being a chlorine atom, a nitro group or a trifluoromethyl group.
- as regards p, p may be 1 or 2. More preferably, p may be 2.
- as regards q, q may be 1 or 2. More preferably, q may be 2;

and its agriculturally acceptable possible tautomers and addition salts with an acid or a base.
More preferably, the pyridylmethylbenzamide derivative of general formula (I) present in the composition of the present invention is :

- a compound (Ia) which is 2,6-dichloro-N-{[3-chloro-5-(trifluoromethyl)-2-pyridinyl]methyl}benzamide; or
- a compound (Ib) which is N-{[3-chloro-5-(trifluoromethyl)-2-pyridinyl]methyl}-2-fluoro-6-nitrobenzamide; or
- a compound (Ic) which is N-{[3-chloro-5-(trifluoromethyl)-2-pyridinyl]methyl}-2-methyl-6-nitrobenzamide;

and its agriculturally acceptable possible tautomers and addition salts with an acid or a base.
The composition according to the present invention comprises at least a pyridylmethylbenzamide derivative of general formula (I) (a) and dithianon (b) in an (a) / (b) weight ratio of from 0.01 to 10; preferably of from 0.05 to 1; even more preferably, of from 0.1 to 0.6.
The composition of the present invention may further comprise a third fungicide active ingredient (c).
The fungicidal active ingredient (c) may be selected from azaconazole, azoxystrobin, (Z)-*N*-[α-(cyclopropylmethoxyimino)-2,3-difluoro-6-(trifluoromethyl)benzyl]-2-phenylacetamide, benalaxyl, benomyl, benthiavalicarb, biphenyl, bitertanol, blasticidin-S, boscalid, borax, bromuconazole, bupirimate, sec-butylamine, calcium polysulfide, captafol, captan, carbendazim, carboxin, carpropamid, chinomethionat, chlorothalonil, chlozolinate, copper hydroxide, copper octanoate, copper oxychloride, copper sulfate, cuprous oxide, cymoxanil, cyproconazole, cyprodinil, dazomet, debacarb, dichlofluanid, dichlorophen, diclocymet, diclomezine, dicloran, diethofencarb, difenoconazole, difenzoquat metilsulfate, difenzoquat, diflumetorim, dimethirimol, dimethomorph, diniconazole, dinobuton, dinocap, diphenylamine, dodemorph, dodemorph acetate, dodine, edifenphos, epoxiconazole, ethaboxam, ethirimol, ethoxyquin, etridiazole, famoxadone, fenamidone, fenarimol, fenbuconazole, fenfuram, fenhexamid, fenpiclonil, fenoxanil, fenpropidin, fenpropimorph, fentin, fentin hydroxide, fentin acetate, ferbam, ferimzone, fluazinam, fludioxonil, fluoroimide, fluoxastrobin, fluquinconazole, flusilazole, flusulfamide, flutolanil, flutriafol, folpet, formaldehyde, fosetyl, fosetyl-aluminium, fosetyl-sodium, fuberidazole, furalaxyl, furametpyr, guazatine, guazatine acetates, hexachlorobenzene, hexaconazole, 8-hydroxyquinoline sulfate, potassium hydroxyquinoline sulfate, hymexazol, cyazofamid, imazalil sulfate, imazalil, imibenconazole, iminoctadine, iminoctadine triacetate, ipconazole, iprobenfos, iprodione, iprovalicarb, isoprothiolane, kasugamycin, kasugamycin hydrochloride hydrate, kresoxim-methyl, mancopper, mancozeb, maneb, mepanipyrim, mepronil, mercuric chloride, mercuric oxide, mercurous chloride, metalaxyl, metalaxyl-M, metam-sodium, metam, metconazole, methasulfocarb, methyl isothiocyanate, metiram, metominostrobin, mildiomycin, myclobutanil, nabam, nickel bis(dimethyldithiocarbamate), nitrothal-isopropyl, nuarimol, octhilinone, ofurace, oleic acid, oxadixyl, oxine-copper, oxpoconazole fumarate, oxycarboxin, pefurazoate, penconazole, pencycuron, pentachlorophenol, sodium pentachlorophenoxide, pentachlorophenyl laurate, phenylmercury acetate, sodium 2-phenylphenoxide, 2-phenylphenol, phthalide, picoxystrobin, piperalin, polyoxinspolyoxin B, polyoxin, polyoxorim, probenazole, prochloraz, procymidone, propamocarb hydrochloride, propamocarb, propiconazole, propineb, prothioconazole, pyrazophos, pyributicarb, pyrifenox, pyrimethanil, pyroquilon, quinoxyfen, quintozene, silthiofam, spiroxamine, sulfur, tar oils, tebuconazole, tecnazene, tetraconazole, thiabendazole, thifluzamide, thiophanate-methyl, thiram, tolclofos-methyl, tolylfluanid, triadimefon, triadimenol, triazoxide, tricyclazole, tridemorph, trifloxystrobin, triflumizole, triforine, triticonazole, validamycin, vinclozolin, zineb, ziram, zoxamide, phosphorous acid, pyraclostrobin and simeconazole.

The third fungicidal active ingredient may preferably be selected from phosphorous acid derivative, phosphorous acid itself, or alkali metal, alkaline-earth metal or metallic salts thereof. More preferably, the additional fungicidal compound may be chosen as being fosetyl-aluminium.

Where the third active ingredient (c) as defined above is present in the composition, this compound may be present in an amount of (a) : (b) : (c) weight ratio of from 0.01 : 1 : 0.1 to 10 : 1 : 10; the ratios of compound (a) and compound (c) varying independently from each other. Preferably, the (a) : (b) : (c) weight ratio may be of from 0.05 : 1 : 1 to 1 : 1 : 8; more preferably of from 0.1 : 1 : 2 to 0.6 : 1 : 5; the ratios of compound (a) and compound (c) varying independently from each other.

Following compositions may be cited to illustrate in a non-limited manner the present invention : compound (Ia) with dithianon; compound (Ia) with dithianon and fosetyl-aluminium; compound (Ib) with dithianon; compound (Ib) with dithianon and fosetyl-aluminium; compound (Ic) with dithianon; compound (Ic) with dithianon and fosetyl-aluminium.

The composition according to the present invention may further comprise an other additional component such as an agriculturally acceptable support, carrier or filler.

In the present specification, the term "support" denotes a natural or synthetic, organic or inorganic material with which the active material is combined to make it easier to apply, notably to the parts of the plant. This support is thus generally inert and should be agriculturally acceptable. The support may be a solid or a liquid. Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

The composition may also comprise other additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. The presence of at least one surfactant is generally essential when the active material and/or the inert support are water-insoluble and when the vector agent for the application is water. Preferably, surfactant content may be comprised between 5% and 40% by weight of the composition.

Additional components may also be included, e.g. protective colloids, adhesives, thickeners, thixotropic agents, penetration agents, stabilisers, sequestering agents. More generally, the active materials can be combined with any solid or liquid additive, which complies with the usual formulation techniques.

In general, the composition according to the invention may contain from 0.05 to 99% (by weight) of active material, preferably 10 to 70% by weight.

Compositions according to the present invention can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

These compositions include not only compositions which are ready to be applied to the plant or seed to be treated by means of a suitable device, such as a spraying or dusting device, but also concentrated commercial compositions which must be diluted before they are applied to the crop.

The fungicidal compositions of the present invention can be used to curatively or preventively control the phytopathogenic fungi of crops. Thus, according to a further aspect of the present invention, there is provided a method for preventively or curatively controlling phytopathogenic fungi of crops characterised in that a fungicidal composition as hereinbefore defined is applied to the seed, the plant and/or to the fruit of the plant or to the soil in which the plant is growing or in which it is desired to grow.

The composition as used against phytopathogenic fungi of crops comprises an effective and non-phytotoxic amount of an active material of general formula (I).

The expression "effective and non-phytotoxic amount" means an amount of composition according to the invention which is sufficient to control or destroy the fungi present or liable to appear on the crops, and which does not entail any appreciable symptom of phytotoxicity for the said crops. Such an amount can vary within a wide range depending on the fungus to be combated, the type of crop, the climatic conditions and the compounds included in the fungicidal composition according to the invention.

This amount can be determined by systematic field trials, which are within the capabilities of a person skilled in the art.

The method of treatment according to the present invention is useful to treat propagation material such as tubers or rhizomes, but also seeds, seedlings or seedlings pricking out and plants or plants pricking out. This method of treatment can also be useful to treat roots. The method of treatment according to the present invention can also be useful to treat the overground parts of the plant such as trunks, stems or stalks, leaves, flowers and fruits of the concerned plant.

Among the plants that can be protected by the method according to the invention, mention may be made of cotton; flax; vine; fruit or vegetable crops such as *Rosaceae sp.* (for instance pip fruits such as apples and pears, but also stone fruits such as apricots, almonds and peaches), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for instance banana trees and plantins), *Rubiaceae sp., Theaceae sp., Sterculiceae sp., Rutaceae sp.* (for instance lemons, oranges and grapefruits); leguminous crops such as *Solanaceae sp.* (for instance tomatoes), *Liliaceae sp., Asteraceae sp.* (for instance lettuces), *Umbelliferae sp., Cruciferae sp., Chenopodiaceae sp., Cucurbitaceae sp., Papilionaceae sp.* (for instance peas), *Rosaceae sp.* (for instance strawberries); big crops such as *Graminae sp.* (for instance maize, lawn or cereals such as wheat, rice, barley and triticale), *Asteraceae sp.* (for instance sunflower), *Cruciferae sp.* (for instance colza), *Papilionaceae sp.* (for instance soja), *Solanaceae sp.* (for instance potatoes), *Chenopodiaceae sp.* (for instance beetroots); horticultural and forest crops; as well as genetically modified homologues of these crops.

Among the plants and the possible diseases of these plants protected by the method according to the present invention, mention may be made of :

- wheat, as regards controlling the following seed diseases: fusaria *(Microdochium nivale* and *Fusarium roseum*), stinking smut *(Tilletia caries, Tilletia controversa* or *Tilletia indica),* septoria disease (*Septoria nodorum)* and loose smut;
- wheat, as regards controlling the following diseases of the aerial parts of the plant: cereal eyespot *(Tapesia yallundae, Tapesia acuiformis),* take-all (*Gaeumannomyces graminis*)*,* foot blight (*F. culmorum, F. graminearum*)*,* black speck *(Rhizoctonia cerealis),* powdery mildew (*Erysiphe graminis forma specie tritici*)*,* rusts (*Puccinia striiformis* and *Puccinia recondita*) and septoria diseases (*Septoria tritici* and *Septoria nodorum);*
- wheat and barley, as regards controlling bacterial and viral diseases, for example barley yellow mosaic;
- barley, as regards controlling the following seed diseases: net blotch (*Pyrenophora graminea, Pyrenophora teres* and *Cochliobolus sativus),* loose smut (*Ustilago nuda*) and fusaria (*Microdochium nivale* and *Fusarium roseum);*
- barley, as regards controlling the following diseases of the aerial parts of the plant: cereal eyespot *(Tapesia yallundae),* net blotch (*Pyrenophora teres* and *Cochliobolus sativus*)*,* powdery mildew (*Erysiphe graminis forma specie hordei*)*,* dwarf leaf rust (*Puccinia hordei*) and leaf blotch *(Rhynchosporium secalis);*
- potato, as regards controlling tuber diseases (in particular *Helminthosporium solani, Phoma tuberosa, Rhizoctonia*

*solani, Fusarium solani),* mildew *(Phytopthora infestans)* and certain viruses (virus Y);

- potato, as regards controlling the following foliage diseases: early blight *(Alternaria solani),* mildew *(Phytophthora infestans);*
- cotton, as regards controlling the following diseases of young plants grown from seeds: damping-off and collar rot (*Rhizoctonia solani, Fusarium oxysporum)* and black root rot *(Thielaviopsis basicola);*
- protein yielding crops, for example peas, as regards controlling the following seed diseases: anthracnose (*Ascochyta pisi, Mycosphaerella pinodes),* fusaria *(Fusarium oxysporum),* grey mould (*Botrytis cinerea)* and mildew *(Peronospora pisi*);
- oil-bearing crops, for example rape, as regards controlling the following seed diseases: *Phoma lingam, Alternaria brassicae* and *Sclerotinia sclerotiorum;*
- corn, as regards controlling seed diseases: (*Rhizopus* sp., *Penicillium* sp., *Trichoderma* sp., *Aspergillus* sp., and *Gibberella fujikuroi);*
- flax, as regards controlling the seed disease: *Alternaria linicola;*
- forest trees, as regards controlling damping-off *(Fusarium oxysporum, Rhizoctonia solani*)*;*
- rice, as regards controlling the following diseases of the aerial parts: blast disease *(Magnaporthe grisea),* bordered sheath spot (*Rhizoctonia solani*)*;*
- leguminous crops, as regards controlling the following diseases of seeds or of young plants grown from seeds: damping-off and collar rot (*Fusarium oxysporum, Fusarium roseum, Rhizoctonia solani, Pythium sp.);*
- leguminous crops, as regards controlling the following diseases of the aerial parts: grey mould (Botrytis sp.), powdery mildews (in particular *Erysiphe cichoracearum, Sphaerotheca fuliginea* and *Leveillula taurica),* fusaria (*Fusarium. oxysporum, Fusarium roseum),* leaf spot *(Cladosporium sp.),* alternaria leaf spot *(Alternaria sp.),* anthracnose *(Colletotrichum sp.),* septoria leaf spot (*Septoria sp.),* black speck (*Rhizoctonia solani*)*,* mildews (for example *Bremia lactucae, Peronospora sp., Pseudoperonospora sp., Phytophthora sp.);*
- fruit trees, as regards diseases of the aerial parts: monilia disease (*Monilia fructigenae, M. laxa*)*,* scab (*Venturia inaequalis*)*,* powdery mildew (*Podosphaera leucotricha);*
- vine, as regards diseases of the foliage: in particular grey mould (*Botrytis cinerea*)*,* powdery mildew (*Uncinula necator*)*,* black rot (*Guignardia biwelli)* and mildew *(Plasmopara viticola);*
- beetroot, as regards the following diseases of the aerial parts: cercospora blight (*Cercospora beticola),* powdery mildew *(Erysiphe beticola),* leaf spot *(Ramularia beticola).*

Preferably, the plant that can be protected by the method according to the present invention is vine.

The fungicidal composition according to the present invention may also be used against fungal diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting one or more compounds of the present invention, or a composition according to the invention; this includes for example direct application, spraying, dipping, injection or any other suitable means.

The dose of active material usually applied in the treatment according to the present invention is generally and advantageously between 10 and 2000 g/ha, preferably between 50 and 1500 g/ha for applications in foliar treatment. The dose of active substance applied is generally and advantageously between 2 and 200 g per 100 kg of seed, preferably between 3 and 150 g per 100 kg of seed in the case of seed treatment. It is clearly understood that the doses indicated above are given as illustrative examples of the invention. A person skilled in the art will know how to adapt the application doses according to the nature of the crop to be treated.

The fungicidal composition according to the present invention may also be used in the treatment of genetically modified organisms with the compounds according to the invention or the agrochemical compositions according to the invention. Genetically modified plants are plants into whose genpme a heterologous gene encoding a protein of interest has been stably integrated. The expression "heterologous gene encoding a protein of interest" essentially means genes which give the transformed plant new agronomic properties, or genes for improving the agronomic quality of the transformed plant.

The compositions according to the present invention may also be used fore the preparation of composition useful to curatively or preventively treat human and animal fungal diseases such as, for example, mycoses, dermatoses, trichophyton diseases and candidiases or diseases caused by *Aspergillus spp.,* for example *Aspergillus fumigatus.*

The following invention will now be illustrated in a non-limiting manner with the following examples.

**Example** 1 : **treatment of vine with a composition comprising compound Ia and dithianon**

This example demonstrates a synergy for a mixture of 2,6-dichloro-N-{[3-chloro-5-(trifluoromethyl)-2-pyridinyl] methyl}benzamide (compound Ia) and dithianon on Vine downy mildew (*Plasmopara Viticola)* in 72h preventive application.

Vine plants variety Cabernet Sauvignon were grown in a sandy soil in plastic pots with a single plant per pot. At the age of 2 months (6 to 7 leaves developed), these plants were sprayed with the two fungicides either alone or in a mixture. Fungicides applied in mixtures were also applied singly at the same doses as those used in the combinations.

The fungicides, either alone or in mixtures, were applied at a volume rate of 2501 water per ha.

Two ratios were studied with compound Ia : dithianon equal to 1:5 and 1:10. Mixture of compound Ia with dithianon has been prepared with dithianon in the form of water-dispersible granules (WG) at 750 g/kg and compound Ia in the form of concentrated solution (SC)at 480 g/L.

Three days after treatment, each plant was inoculated by spraying an aqueous suspension of sporangia of *Plasmopara viticola* obtained from contaminated leaves. The concentration of sporangia was about 100,000 units per ml.

After contamination the plants were incubated for 7 days at 20°C in a saturated atmosphere.

Seven days after contamination, symptoms were evaluated in terms of the extent of the lower surface of the leaves infected, in comparison with untreated but contaminated plants.

The efficacy of the treatment was calculated using the Abbott formula:

**Efficacy =(Untreated - Treated / Untreated) x 100**

The concentrations of the fungicides alone or in a mixture giving 100% efficacy for each component were determined based on the sigmoid curve dose/response model with their confidence intervals.

The analyses of the results were carried out using the Tammes model (Isoboles, a graphic representation of synergism in pesticides, Neth.J. Plant Path. 70 (1964): 73-80) or Colby model.

The results obtained are presented in the form of points values, corresponding to 100% control of the pathogen and placed in a Tammes isobole diagram which comprises on the x-axis the doses of compound Ia expressed in mg/l and on the y-axis the doses of dithianon also in mg/l.

The calculated results corresponding to the effective doses providing 100% of disease control for the ratios that have been evaluated are presented in the following Table 1.

Table 1

| Compound Ia : dithianon ratio | 1:2.5 | 1:5 | 1:10 | Compound Ia alone | Dithianon alone |
|---|---|---|---|---|---|
| **Practical dose for 100% efficacy** | 19.6 | 9 | 4.7 | 28 | 77 |
| **Theoretical dose for 100% efficacy** | 16 | 11.7 | 7.2 | - | - |

These results have been calculated on the basis of 4 repeats per factor according to the Tammes method taking into account the product efficacy for a range of ratios.

This preventive test on grapevine downy mildew shows the synergism of the compositions containing compounds A and B at the ratios equal to 1:5 and 1:10. It has been demonstrated that less amount of both compounds are necessary to control practically 100% of the disease compared to the theoretical doses of each compounds expected in the mixture with just additional effect.

A synergy of the above mixture is also demonstrated when data are analysed according to the Colby method. Following Table 2 presents the results obtained based on using the Colby method for evaluating the synergy of the mixture of Compound Ia and dithianon according to the invention.

Table 2

| | | |
|---|---|---|
| Dose of compound Ia (in mg/l<br>Dose of dithianon (in mg/l) | 0.39<br>3.9 | 5<br>50 |
| Practical efficacy (%) | 44 | 97 |
| Theoretical efficacy (%) | 34 | 91 |

Synergy effect according to the Colby method is demonstrated between compound Ia and dithianon for the ratio 1:10. Practical efficacy for two doses were better than their theoretical efficacy.

**Example 2 : treatment of vine with a composition comprising compound Ia, dithianon and fosetyl-aluminium**

This example demonstrates a synergy for a mixture of 2,6-dichloro-N-{[3-chloro-5-(trifluoromethyl)-2-pyridinyl] methyl}benzamide (compound Ia), dithianon and fosetyl-aluminium on Vine downy mildew (*Plasmopara Viticola*) in 72h preventive application.

Vine plants variety Cabernet Sauvignon were grown in a sandy soil in plastic pots with a single plant per pot. At the age of 2 months (6 to 7 leaves developed), these plants were sprayed with the three fungicides either alone or in a mixture. Fungicides applied in mixtures were also applied singly at the same doses as those used in the combinations.

The fungicides, either alone or in mixtures, were applied at a volume rate of 2501 water per ha.

Two ratios were studied of compound Ia : dithianon : fosetyl-Al equal to 0.4 : 1: 4 and 0.4 : 1 : 8.

Mixture of compound Ia with dithianon and fosetyl-Al has been prepared with fosetyl-Al in the form of water-dispersible granules (WG) at 800 g/kg, compound Ia in the form of concentrated solution (SC) at 480 g/L and dithianon in the form of water-dispersible granules (WG) at 750 g/kg.

Three days after treatment, each plant was inoculated by spraying an aqueous suspension of sporangia of *Plasmopara viticola* obtained from contaminated leaves. The concentration of sporangia was about 100,000 units per ml.

After contamination the plants were incubated for 7 days at 20°Celsius in a saturated atmosphere.

Seven days after contamination, symptoms were evaluated in terms of the extent of the lower surface of the leaves infected, in comparison with untreated but contaminated plants.

The efficacy of the treatment was calculated using the Abbott formula:

$$\text{Efficacy} = (\text{Untreated} - \text{Treated} / \text{Untreated}) \times 100$$

The concentrations of the fungicides alone or in a mixture giving 100% efficacy for each component were determined based on the sigmoid curve dose/response model with their confidence intervals .The analyses of the results were carried out using the Tammes model (Isoboles, a graphic representation of synergism in pesticides, Neth.J. Plant Path. 70 (1964): 73-80) or Colby model.

The results obtained are presented in the form of points values, corresponding to 100% control of the pathogen and placed in a Tammes isobole diagram which comprises on the x-axis the doses of compound Ia / dithianon mix expressed in mg/l and on the y-axis the doses of fosetyl-Al also in mg/l.

The calculated results corresponding to the effective doses providing 100% of disease control for the ratios that have been evaluated are presented in Table 3.

Table 3

| Compound Ia : dithianon : fosetyl-Al ratio | 0.4:1:4 | 0.4:1:8 | Compound Ia / dithianon | Fosetyl-Al alone |
|---|---|---|---|---|
| **Practical dose for 100% efficacy** | 49 | 53 | 86 | > 2000 |
| **Theoretical dose for 90% efficacy** | 82 | 77 | - | - |

These results have been calculated on the basis of 4 repeats per factor according to the Tammes method taking into account the product efficacy for a range of ratios.

This preventive test on grapevine downy mildew shows the synergism of the compositions containing compound Ia : dithianon : fosetyl-Aluminium at ratios equal to 0.4 : 1 : 4 and 0.4 : 1 : 8. It has been demonstrated that less amount of the three compounds are necessary to control practically 100% of the disease compared to the theoretical doses of each compounds expected in the mixture with just additional effect.

## Claims

**1.** A composition comprising:

a) a pyridylmethylbenzamide derivative of general formula (I)

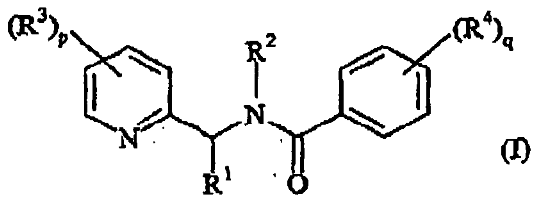

(I)

in which:

- $R^1$ may be a hydrogen atom, an optionally substituted alkyl group or an optionally substituted acyl group;
- $R^2$ may be a hydrogen atom or an optionally substituted alkyl group;
- $R^3$ and $R^4$ may be chosen independently from each other as being a halogen atom, a hydroxyl group, a cyano group, a nitro group, $-SF_5$, a trialkylsilyl group, an optionally substituted amino group, an acyl group, or a group E, OE or SE, in which E may be an alkyl, alkenyl alkynyl, cycloakyl, cycloalkenyl, aryl or a heterocyclyl group each of which may optionally be substituted;
- p represents 0, 1, 2, 3 or 4;
- q represents 0, 1, 2, 3 or 4;

and its agriculturally acceptable optical and/or geometric isomers tautomers and addition salts with an acid or a base;
and
b) 5,10-dihydro-5,10-dioxonaphtho[2,3-b]-1,4-dithiine-2,3-dicarbonitrile;

in an (a) / (b) weight ratio of from 0.01 to 10.

**2.** A composition according to claim 1, **characterised in that** $R^1$ and $R^2$ are chosen independently from each other as being a hydrogen atom or an optionally substituted alkyl group.

**3.** A composition according to claim 2, **characterised in that** $R^1$ and $R^2$ are both hydrogen atoms.

**4.** A composition according to any one of the claims 1 to 3, **characterised in that** $R^3$ and $R^4$ are chosen independently from each other as being a halogen atom, a hydroxyl group, a nitro group, an optionally substituted amino group, an acyl group, or a group E, OE or SE, in which E may be a alkyl, a cycloalkyl, a phenyl or a heterocyclyl group, each of which may optionally be subtituted.

**5.** A composition according to claim 4, **characterised in that** $R^3$ and $R^4$ are chosen independently from each other as being a halogen atom, a nitro group or a halogenoakyl group.

**6.** A composition according to claim 5, **characterised in that** the halogen atom is a chlorine atom and the halogenoalkyl group is a trifluoromethyl group.

**7.** A composition according to any one of the claims 1 to 6, **characterised in that** p and q are chosen independently from each other as being is 1 or 2.

**8.** A composition according to claim 7, **characterised in that** p is 2.

**9.** A composition according to claim 7 or 8, **characterised in that** q is 2.

**10.** A composition according to any one of the claims 1 to 9, **characterised in that** the compound of general formula (I) is chosen as being

- a compound (Ia) which is 2,6-dichloro-N-{[3-chloro-5-(trifluoromethyl)-2-pyridinyl]methyl}benzamide; or
- a compound (Ib) which is N-{[3-chloro-5-(trifluoromethyl)-2-pyridinyl]methyl}-2-fluoro-6-nitrobenzamide; or
- a compound (Ic) which is N-{[3-chloro-5-(trifluoromethyl)-2-pyridinyl]methyl}-2-methyl-6-nitrobenzamide.

**11.** A composition according to any one of the claims 1 to 10, **characterised in that** the (a) / (b) weight ratio is from 0.05 to 1.

**12.** A composition according to claim 11, **characterised in that** the (a) / (b) weight ratio is from 0.1 to 0.6.

**13.** A composition according to any one of the claims 1 to 12 further comprising a fungicidal compound (c).

**14.** A composition according to claim 13, **characterised in that** the additional fungicidal compound is selected from phosphorous acid derivative, phosphorous acid itself, or alkali metal, alkaline-earth metal or metallic salts thereof.

**15.** A composition according to claim 14, **characterised in that** the additional fungicidal compound is fosetyl-aluminium.

**16.** A composition according to any one of the claims 13 to 15, **characterised in that** compound (c) is present in an amount of (a) : (b) : (c) weight ratio of from 0.01:1:0.1 to 10:1:10; the ratios of compound (a) and compound (c) varying independently from each other.

**17.** A composition according to any one of the claims 1 to 16, **characterised in that** it further comprises an agriculturally acceptable support, carrier, filler and/or surfactant.

**18.** A method for preventively or curatively controlling phytopathogenic fungi of crops, **characterised in that** an effective and non-phytotoxic amount of a composition according to any one of the claims 1 to 17 is applied to the seed, the plant and/or to the fruit of the plant or to the soil in which the plant is growing or in which it is desired to grow.

**19.** A method according to claim 18, **characterised in that** the plant is vine.

**Patentansprüche**

**1.** zusammensetzung, die Folgendes umfasst:

a) ein Pyridylmethylbenzamidderivat der allgemeinen Formel (I)

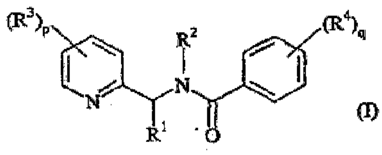

(I)

in der:

- $R^1$ ein Wasserstoffatom, eine gegebenenfalls substituierte Allylgruppe oder eine gegebenenfalls substituierte Acylgruppe sein kann;
- $R^2$ ein Wasserstoffatom oder eine gegebenenfalls substituierte Allylgruppe sein kann;
- $R^3$ und $R^4$ unabhängig voneinander aus der Reihe Halogenatom, Hydroxylgruppe, Cyanogruppe, Nitrogruppe, $-SF_5$, Trialkylsilylgruppe, gegebenenfalls substituierte Aminogruppe, Acylgruppe oder eine Gruppe E, OE oder SE, in der E eine Alkyl-, Alkenyl-, Alkinyl-, Cycloalkyl-, Cycloalkenyl-, Aryl- oder Heterocyclylgruppe, die jeweils gegebenenfalls substituiert sein kann, bedeutet, ausgewählt sein können;
- p 0, 1, 2, 3 oder 4 bedeutet ;
- q 0, 1, 2, 3 oder 4 bedeutet;

und ihre landwirtschaftlich annehmbaren optischen und/oder geometrischen Isomere, Tautomere und Additionssalze mit einer Säure oder einer Base;
und
b) 5,10-Dihydro-5,10-dioxonaphthol[2,3-b]-1,4-dithiin-2,3-dicarbonsäurenitril;

in einem (a)/(b)-Gewichtsverhältnis von 0,01 bis 10.

**2.** Zusammensetzung nach Anspruch 1, **dadurch gekennzeichnet, dass** $R^1$ und $R^2$ jeweils unabhängig voneinander aus der Gruppe wasserstoffatom oder gegebenenfalls substituierte Alkylgruppe ausgewählt sind.

3. Zusammensetzung nach Anspruch 2, **dadurch gekennzeichnet, dass** sowohl $R^1$ als auch $R^2$ Wasserstoffatome sind.

4. Zusammensetzung nach einem der Ansprüche 1 bis 3, **dadurch gekennzeichnet, dass** $R^3$ und $R^4$ jeweils unabhängig voneinander aus der Reihe Wasserstoffatom, Hydroxylgruppe, Nitrogruppe, gegebenenfalls substituierte Aminogruppe, Acylgruppe oder eine Gruppe E, OE oder SE, in der E eine Alkyl-, Cycloalkyl-, Phenyl- oder Heterocyclylgruppe, die jeweils gegebenenfalls substituiert sein kann, bedeutet, ausgewählt sind.

5. Zusammensetzung nach Anspruch 4, **dadurch gekennzeichnet, dass** $R^3$ und $R^4$ jeweils unabhängig voneinander aus der Gruppe Halogenatom, Nitrogruppe oder Halogenalkylgruppe ausgewählt sind.

6. Zusammensetzung nach Anspruch 5, **dadurch gekennzeichnet, dass** das Halogenatom ein Chloratom ist und die Halogenalkylgruppe eine Trifluormethylgruppe ist.

7. Zusammensetzung nach einem der Ansprüche 1 bis 6, **dadurch gekennzeichnet, dass** p und q jeweils unabhängig voneinander aus der Reihe 1 oder 2 ausgewählt sind.

8. Zusammensetzung nach Anspruch 7, **dadurch gekennzeichnet, dass** p 2 ist.

9. Zusammensetzung nach Anspruch 7 oder 8, **dadurch gekennzeichnet, dass** q 2 ist.

10. Zusammensetzung nach einem der Ansprüche 1 bis 9, **dadurch gekennzeichnet, dass** die Verbindung der allgemeinen Formel (I) aus der Reihe

    - Verbindung (Ia), bei der es sich um 2,6-Dichlor-N-{[3-chlor-5-(trifluormethyl)-2-pyridinyl]methyl}benzamid handelt; oder
    - Verbindung (Ib), bei der es sich um N-{[3-chlor-5-(trifluormethyl)-2-pyridinyl]methyl}-2-fluor-6-nitrobenzamid handelt; oder
    - Verbindung (Ic), bei der es sich um N-{[3-Chlor-5-(trifluormethyl)-2-pyridinyl]methyl}-2-methyl-6-nitrobenzamid handelt,

    ausgewählt ist.

11. Zusammensetzung nach einem der Ansprüche 1 bis 10, **dadurch gekennzeichnet, dass** das (a)/(b)-Gewichtsverhältnis 0,05 bis 1 beträgt.

12. Zusammensetzung nach Anspruch 11, **dadurch gekennzeichnet, dass** das (a)/(b)-Gewichtsverhältnis 0,1 bis 0,6 beträgt.

13. Zusammensetzung nach einem der Ansprüche 1 bis 12, die weiterhin eine fungizide Verbindung (c) umfasst.

14. Zusammensetzung nach Anspruch 13, **dadurch gekennzeichnet, dass** die zusätzliche fungizide Verbindung aus der Reihe Derivat der phosphorigen Säure, phosphorige Säure selbst oder Alkalimetall-, Erdalkalimetall- oder Metallsalze davon ausgewählt ist.

15. Zusammensetzung nach Anspruch 14, **dadurch gekennzeichnet, dass** die zusätzliche fungizide Verbindung Fosetyl-Aluminium ist.

16. Zusammensetzung nach einem der Ansprüche 13 bis 15, **dadurch gekennzeichnet, dass** die Verbindung (c) in einer Menge von (a) : (b) : (c)-Gewichtsverhältnis von 0,01:1:0,1 bis 10:1:10 vorlegt, wobei die Verhältnisse der Verbindungen (a) und (c) unabhängig voneinander variierten.

17. Zusammensetzung nach einem der Ansprüche 1 bis 16, **dadurch gekennzeichnet, dass** sie weiterhin einen landwirtschaftlich annehmbaren Träger, Exzipienten, Füllstoff und/oder ein landwirtschaftlich annehmbares Tensid umfasst.

18. Verfahren für die vorbeugende oder kurative Bekämpfung von phytopathogenen Pilzen an Kulturen, **dadurch gekennzeichnet, dass** man eine wirksame und nicht phytotoxische Menge einer Zusammensetzung nach einem der

Ansprüche 1 bis 17 auf den Samen, die Pflanze und/oder die Frucht der Pflanze oder den Boden, in dem die Pflanze wächst oder wachsen soll, ausbringt.

**19.** Verfahren nach Anspruch 18, **dadurch gekennzeichnet, dass** es sich bei der Pflanze um Rebe handelt.

**Revendications**

**1.** Composition comprenant :

a) un dérivé de pyridylméthylbenzamide représenté par la formule générale (I)

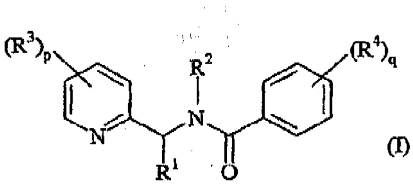

(I)

dans laquelle :

- $R^1$ peut être un atome d'hydrogène, un groupe alkyle facultativement substitué ou un groupe acyle facultativement substitue ;
- $R^2$ peut être un atome d'hydrogène ou un groupe alkyle facultativement substitué ;
- $R^3$ et $R^4$ peuvent être choisis chacun indépendamment de l'autre comme étant un atome d'halogène, un groupe hydroxyle, un groupe cyano, un groupe nitro, $-SF_5$, un groupe trialkylsilyle, un groupe amino facultativement substitué, un groupe acyle ou un groupe E, OE ou SE, dans lequel E peut être un groupe alkyle, alcényle, alcynyle, cycloalkyle, cycloalcényle, aryle ou hétérocyclyle, chacun de ceux-ci pouvant être facultativement substitué ;
- p représente 0, 1, 2, 3 ou 4 ;
- g représente 0, 1, 2, 3 ou 4 ;

et ses isomères optiques et/ou géométriques, tautomères et sels d'addition avec un acide ou une base acceptables en agriculture ;
et
b) du 5,10-dihydro-5,10-dioxonaphto[2,3-b]-1,4-dithiine-2,3-dicarbonitrile ;

en un rapport pondéral (a)/(b) de 0,01 à 10.

**2.** Composition selon la revendication 1, **caractérisée en ce que** $R^1$ et $R^2$ sont choisis chacun indépendamment de l'autre comme étant un atome d'hydrogène ou un groupe alkyle facultativement substitué.

**3.** Composition selon la revendication 2, **caractérisée en ce que** $R^1$ et $R^2$ sont tous deux des atomes d'hydrogène.

**4.** Composition selon l'une quelconque des revendications 1 à 3, **caractérisée en ce que** $R^3$ et $R^4$ sont choisis chacun indépendamment de l'autre comme étant un atome d'halogène, un groupe hydroxyle, un groupe nitro, un groupe amino facultativement substitué, un groupe acyle ou un groupe E, OE ou SE, dans lequel E peut être un groupe alkyle, cycloalkyle, phényle ou hétérocyclyle, chacun de ceux-ci pouvant être facultativement substitué.

**5.** Composition selon la revendication 4, **caractérisée en ce que** $R^2$ et $R^4$ sont choisis chacun indépendamment de l'autre comme étant un atome d'halogène, un groupe nitro ou un groupe halogénoalkyle.

**6.** Composition selon la revendication 5, **caractérisée en ce que** l'atome d'halogène est un atome de chlore et le groupe halogénoalkyle est un groupe trifluorométhyle.

**7.** Composition selon l'une quelconque des revendications 1 à 6, **caractérisée en ce que** p et q sont choisis chacun indépendamment de l'autre comme valant 1 ou 2.

**8.** Composition selon la revendication 7, **caractérisée en ce que** p vaut 2.

**9.** Composition selon la revendication 7 ou 8, **caractérisée en ce que** q vaut 2.

**10.** Composition selon l'une quelconque des revendications 1 à 9, **caractérisée en ce que** le composé représenté par la formule générale (I) est choisi comme étant

- un composé (Ia) qui est le 2,6-dichloro-*N*-{[3-chloro-5-(trifluorométhyl)-2-pyridinyl]méthyl}benzamide ; ou
- un composé (Ib) qui est le *N*-{[3-chloro-5-(trifluorométhyl)-2-pyridinyl]méthyl}-2-fluoro-6-nitrobenzamide ; ou
- un composé (Ic) qui est le *N*-{[3-chloro-5-(trifluorométhyl)-2-pyridinyl]méthyl}-2-méthyl-6-nitrobenzamide.

**11.** Composition selon l'une quelconque des revendications 1 à 10, **caractérisée en ce que** le rapport pondéral (a)/(b) est de 0,05 à 1.

**12.** Composition selon la revendication 11, **caractérisée en ce que** le rapport pondéral (a)/(b) est de 0,1 à 0,6.

**13.** Composition selon l'une quelconque des revendications 1 à 12 comprenant en outre un composé fongicide (c).

**14.** Composition selon la revendication 13, **caractérisée en ce que** le composé fongicide supplémentaire est choisi parmi un dérivé de l'acide phosphoreux, l'acide phosphoreux lui-même ou des sels de métal alcalin, de métal alcalinoterreux ou métalliques de ceux-ci.

**15.** Composition selon la revendication 14, **caractérisée en ce que** le composé fongicide supplémentaire est le fosétyl-aluminium.

**16.** Composition selon l'une quelconque des revendications 13 à 15, **caractérisée en ce que** le composé (c) est présent en une quantité donnant un rapport pondéral (a):(b):(c) de 0,01:1:0,1 à 10:1:10, les proportions du composé (a) et du composé (c) variant indépendamment l'une de l'autre.

**17.** Composition selon l'une quelconque des revendications 1 à 16, **caractérisée en ce qu'**elle comprend en outre un support, un véhicule, une charge et/ou un tensioactif acceptables en agriculture.

**18.** Procédé pour la lutte de façon préventive ou de façon curative contre des champignons phytopathogènes de cultures, **caractérisé en ce qu'**une quantité efficace et non phytotoxique d'une composition selon l'une quelconque des revendications 1 à 17 est appliquée à la semence, la plante et/ou au fruit de la plante ou au sol dans lequel la plante pousse ou dans lequel on souhaite qu'elle pousse.

**19.** Procédé selon la revendication 18, **caractérisé en ce que** la plante est la vigne.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1056723 A
- WO 02069713 A
- WO 2004008857 A


### Non-patent literature cited in the description


- Calculation of the synergistic and antagonistic responses of herbicide combinations. *Weeds,* 1967, vol. 15, 20-22
- **TAMMES.** Isoboles, a graphic representation of synergism in pesticides. *Netherlands Journal of Plant Pathology,* 1964, vol. 70, 73-80
- Isoboles, a graphic representation of synergism in pesticides. *Neth.J. Plant Path.,* 1964, vol. 70, 73-80